# EUROPEAN PATENT SPECIFICATION

(11) **EP 0 291 292 B1**
(45) Date of publication and mention of the grant of the patent: **26.01.1994**
(21) Application number: 88304265.7
(22) Date of filing: 11.05.1988
(51) Int. Cl.: B25J 9/10, F16H 37/12, B25J 1/02, F16H 21/44

(54) **Offset mechanism for a robot**
Ausrückvorrichtung für einen Handhabungsautomaten
Mécanisme à départ pour un robot

(30) Priority: 11.05.1987 JP 114284/87
(43) Date of publication of application: 17.11.1988
(73) Proprietor: Shinko Electric Co. Ltd., Chuo-ku Tokyo 103 (JP)
(72) Inventor: Nakanishi, Sadao c/o Ise Factory, Ise-shi Mie-ken (JP); Nagashima, Hiroshi c/o Ise Factory, Ise-shi Mie-ken (JP); Tomiyasu, Kazuhiro c/o Ise Factory, Ise-shi Mie-ken (JP)
(74) Representative: SERJEANTS

(56) References cited:
- DE-A- 2 802 738
- FR-A- 2 593 106
- GB-A- 2 022 046

## Description

The invention relates to an offset mechanism using rectangular coordinates and suitable for welding or coating or other work.

### Background Art

Such robots have problems over the movement of a tool from the centre of rotation in use. This is explained in detail below after the Best Mode of performing the invention.

A related problem is addressed in the published Patent Application DE-A-2802738. That publication discloses apparatus for maintaining the orientation of a workpiece as it is moved along a linear path. The workpiece is rotatably supported at the end of an extension arm, itself rotatably supported at the end of a main arm. Gear means are provided to determine the relative angular relationships of the main arm, the extension arm and the workpiece such that the trajectory of the workpiece is linear and its orientation is maintained constant.

### The Invention

The invention provides an offset mechanism for a centre of rotation of a robot, comprising:
a frame;
a rotary drive shaft on the frame;
a first arm non-rotatably secured to the rotary drive shaft;
a first support shaft rotatably secured to the first arm so as to be parallel to the rotary drive shaft and spaced therefrom by a distance (1);
a second arm non-rotatably secured to the first support shaft;
a second support shaft rotatably secured to the second arm so as to be parallel to the first support shaft; and
a tool holder non-rotatably secured to the second support shaft;
CHARACTERIZED IN THAT:
the second support shaft is spaced from the first support shaft by a distance (1) equal to the distance (1) between the first support shaft and the rotary drive shaft;
first checking means extend between a first shaft non-rotatably secured to the frame and the first support shaft to maintain a constant angular relationship therebetween; and
second checking means extend between a second shaft non-rotatably secured to the first arm and the second support shaft to maintain a constant angular relationship therebetween;
such that a tool non-rotatably secured to the tool holder is kept parallel to the first arm.

Preferably the checking means comprise belts extending pulleys secured to the appropriate shafts.

### Drawings

Fig. 1 is a longitudinal cross section illustrating a preferred embodiment of the invention.
Fig. 2 is a schematic diagram illustrating the operation in the above embodiment;
Figs. 3 and 4 are side views illustrating a conventional welding robot;
Fig. 5 is a plan view corresponding to Fig. 4;
Fig. 6 is a plan view illustrating the problems with the above conventional welding robot; and
Fig. 7 (a) and (b) are perspective views illustrating other problems with the above conventional welding robot.

### Best Mode

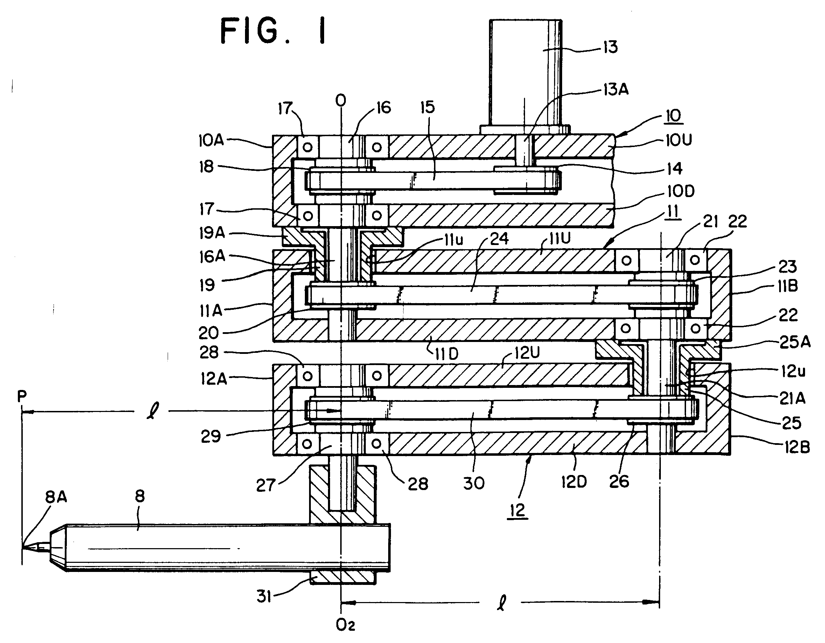

In Fig. 1, a frame 10 in square-section tube (for example a Y-axis frame in a welding robot) is connected to a first arm 11, and that in turn is connected to a second arm 12. The frame 10 and arms 11, 12 are parallel, and the edges of the tubes true. A ϑ-axis drive motor 13 is fixed on the top of the frame 10 some distance away from a closed end 10A, with a pulley 14 mounted at the lower end of a rotary shaft 13A.

A stepped rotary drive shaft 16 adjacent the closed end 10A of the frame 10 is connected to the rotary shaft 13A through a belt 15. The shaft 16 is rotatably secured through bearings 17 in an upper 10U and a lower plate 10D in the frame 10. A pulley 18 is secured to the shaft 16, and a belt 15 is stretched over the pulleys 18 and 14. The shaft 16 has a slender extension 16A protruding from the lower plate 10D and extending to a lower plate 11D of the arm 11 to be connected non-rotatably therewith. The extension 16A penetrates with a clearance through a first stationary shaft 19 which goes through with a clearance a hole 11u in the neighborhood of a closed end 11A of an upper plate 11U of the arm 11. The shaft 19 is hollow, and has a mounting flange 19A which is forced against the lower plate 10D and is bolted thereto (not shown), extending into and terminating in the arm 11 with a pulley 20 mounted at the lower end.

Adjacent an opposite closed end 11B of the arm 11, a first support shaft 21 is rotatably secured by bearings 22 in the upper 11U and lower plate 11D of the arm 11. A pulley 23 is secured to the shaft 21, and a belt 24 is stretched over the pulleys 23 and 20. The first support shaft 21 like the rotary drive shaft 16 has a slender extension 21A protruding from the lower plate 11D and connected non-rotatably to a lower plate 12D. The extension 21A extends with clearance through a second stationary shaft 25 which goes through with clearance a hole 12u in the neighborhood of a closed end 12B of an upper plate 12U in the arm 12. The shaft 25 is hollow and has a mounting flange 25A which is forced against the lower plate 11D and bolted thereto (not shown), extending into and terminating in the arm 12 with a pulley 26 secured at the lower end. Adjacent the other closed end 12A of the arm 12, a second support shaft 27 is rotatably secured by bearings 28 in the upper 12U and lower plate 12D in the frame 12. A pulley 29 is secured on the shaft 27. A belt 30 is stretched over the pulley 29 and a pulley 26 on the shaft 25. The shaft 27 has an extension 27A to which is connected a holder 31 supporting a welding torch 8 of a multiple spindle welding robot.

The distance between a rotational centreline O of the shaft 16 and the centre of the first support shaft 21 is equal to the distance l between an axis O of the second support shaft 27 and the axis of the first support shaft 21, and to the distance horizontally between the axis O of the second support shaft 27 and the front end 8A of the welding torch 8.

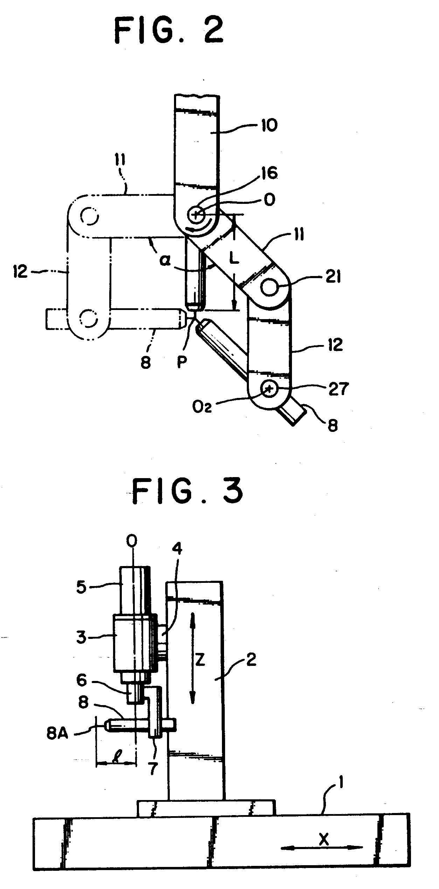

With reference to Fig. 2, if frame 10, and arms 11, 12 are as indicated by the solid lines, when the motor 13 is driven to turn its rotary shaft 13A through an angle of α in the direction of the arrow, the rotation is transmitted to the rotary drive shaft 16 through the pulley 14, belt 15 and pulley 18 to turn the shaft 16. When the shaft 16 is rotated, the first arm 11 supported at the end of the shaft 16 turns through an angle α around the axis O of the shaft 16.

The welding torch 8 is kept at all times in a position parallel to the arm 11 because the torch is connected to the arm 11 through a checking mechanism for the rotation of the support shaft consisting of torch holder 31, second support shaft 27, pulley 29, belt 30, pulley 26, and second stationary shaft 25 fixed supported on the arm 11. The arm 12 is connected to the frame 10 through a checking mechanism for the rotation of the support shaft 21 consisting of the pulley 23, belt 24, pulley 20, and first stationary shaft 19 fixed on the frame 10 so that the arm 11 is kept in a position parallel at all times to the frame 10 even when the arm 11 turns. Thus, when the rotary drive shafts 16 rotates, the arm 11 is caused to rotate around the axis O of the shaft 16, the second support shaft 27 turns around a position P at a distance of l from the axis O of the frame 10, and the welding torch 8 turns through an angle equal to the angle of turn α of the arm 11 keeping a position parallel to the arm 11 so that the welding torch 8 turns around the front end 8A of the torch. Though the front end 8A of the torch 8 and the rotational centreline O of the shaft 16 do not coincide, the welding torch turns around the front end 8A of the torch instead of around the rotational centre O of the shaft 16 so that the rotary shaft 16 is the ϑ-axis of the automatic welding robot;
1. No need arises to make compensation of X-axis and Y-axis coordinates.
2. The possibility of interferences with the work or work-related jig can be reduced without sacrificing the strokes of other axes such as the X-axis or Y-axis.

### Prior Art

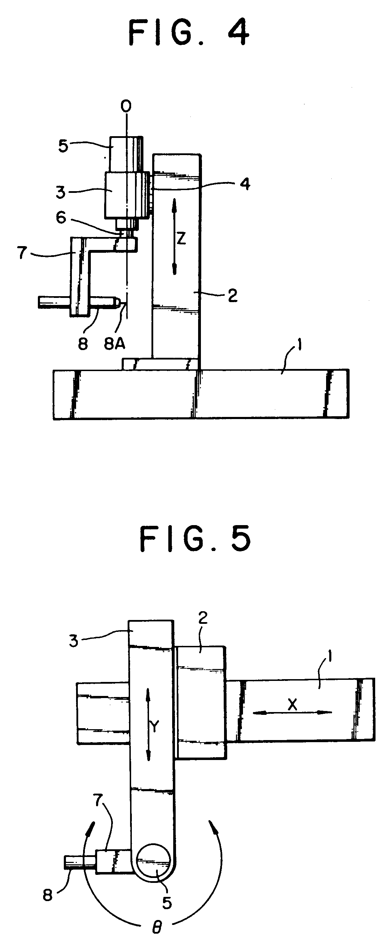

In Fig. 3 and Fig. 4, a base 1 has a guide in the direction of an X-axis, a frame 2 on a Z-axis on the base 1, guided by the X-axis guide and having a Z-axis guide. A Y-axis frame 3 is supported by a member 4 and movable in the direction of the Y-axis guided by the Z-axis guide. A motor 5 for ϑ-axis drive is mounted on the Y-axis frame 3 with a rotary shaft (ϑ-axis) 6 in the direction of the Z-axis. The shaft 6 protrudes downwards from the bottom of the Y-axis frame 3, and fixedly supports a torch holder 7. A welding torch 8 is supported horizontally by the torch holder 7.

Fig. 3 shows how the location of a front end 8A of the torch (welding point) is shifted a horizontal distance l from a centreline (ϑ-axis) O of the rotation of the rotary shaft 6. Fig. 4 shows how the torch 8 is so supported by the torch holder 7 that the location (welding point) of the front end 8A of the torch coincides with rotational centreline (ϑ-axis) O of the rotary shaft 6.

The drive mechanism of the X-axis, Y-axis and Z-axis and their controls are not shown.

In Fig. 4, the front end 8A of the torch is kept on the rotational centreline O with no change in torch angle (the angle between the torch point and the welding torch apparatus). In Fig. 3, the front end 8A of the torch is the distance l from the rotational centreline O so that the front end 8A of the torch makes a circular motion around the rotational centreline O when the shaft 6 is rotated.

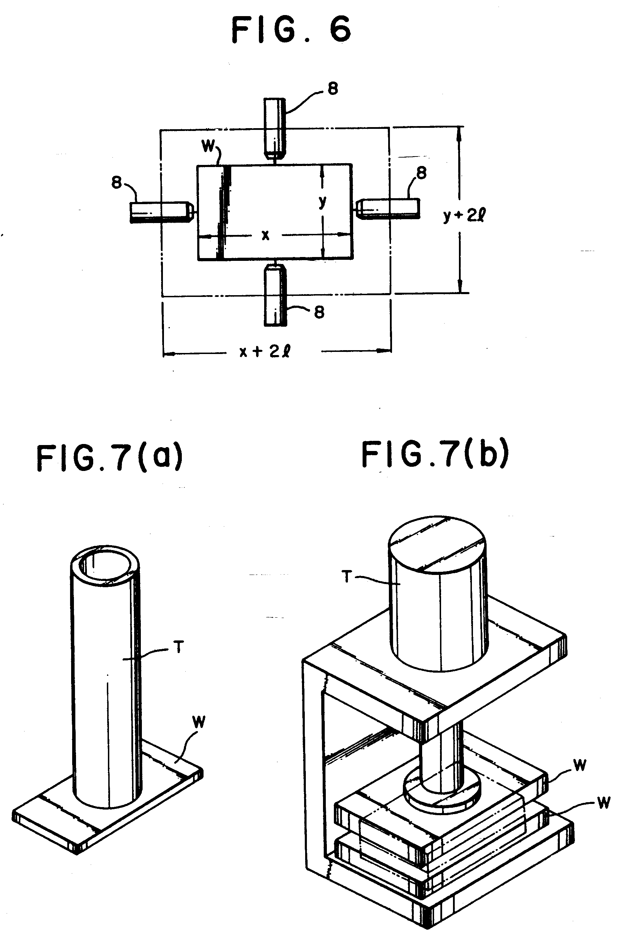

For prevention of shift of the front end 8A of the torch, the conventional method involves the compensation of both X-axis and Y-axis coordinates in a direction to offset the shift when the shaft 6 is rotated. Such compensations make the control of the drive and its motions complex: the central processing unit (CPU) performs arithmetic operations whenever compensation is to be made in order to actuate the X-axis and Y-axis drives. This increases the possibility of interference of the unit with the work tool, and limits the motion space within which the welding torch 8 is moved. Thus up to an additional 2 l is required for the X-axis and Y-axis stroke. In Fig. 4, when such work W (width x, depth y) as shown in Fig. 6 is involved, the work W and the jig T interfere with each other as the axis drive locates above the welding point. In Fig. 7 (a) and (b), the axes and the drives interfere with each other.

## Claims

1. An offset mechanism for a centre of rotation of a robot, comprising:
a frame (10);
a rotary drive shaft (16) on the frame (10);
a first arm (11) non-rotatably secured to the rotary drive shaft (16);
a first support shaft (21) rotatably secured to the first arm (11) so as to be parallel to the rotary drive shaft (16) and spaced therefrom by a distance (1);
a second arm (12) non-rotatably secured to the first support shaft (21);
a second support shaft (27) rotatably secured to the second arm (12) so as to be parallel to the first support shaft (21); and
a tool holder (31) non-rotatably secured to the second support shaft;
CHARACTERIZED IN THAT:
the second support shaft (27) is spaced from the first support shaft (21) by a distance (1) equal to the distance (1) between the first support shaft (21) and the rotary drive shaft (16);
first checking means (24) extend between a first shaft (19) non-rotatably secured to the frame (10) and the first support shaft (21) to maintain a constant angular relationship therebetween; and
second checking means (30) extend between a second shaft (25) non-rotatably secured to the first arm (11) and the second support shaft (27) to maintain a constant angular relationship therebetween;
such that a tool (8) non-rotatably secured to the tool holder (31) is kept parallel to the first arm (11).

2. An offset mechanism according to claim 1, in which the first and second checking means (24,30) comprise belts extending between pulleys (20,23; 26,29) non-rotatably secured to the appropriate shafts.

## Patentansprüche

1. Ausgleichsmechanismus für ein Drehzentrum eines Roboters, mit
- einem Rahmen (10),
- einer drehbaren Antriebswelle (16) an dem Rahmen (10),
- einem ersten Arm (11), der nicht drehbar an der drehbaren Antriebswelle (16) befestigt ist,
- einer ersten Stützwelle (21), die drehbar an dem ersten Arm (10) so befestigt ist, daß sie parallel zu der drehbaren Antriebswelle (16) und von dieser durch einen Abstand (l) entfernt ist,
- einem zweiten Arm (12), der nicht drehbar an der ersten Stützwelle (21) befestigt ist,
- einer zweiten Stützwelle (27), die drehbar an dem zweiten Arm (12) so befestigt ist, daß sie parallel zu der ersten Stützwelle (21) ist, und
- einem Werkzeughalter (31), der nicht drehbar an der zweiten Stützwelle befestigt ist,
**dadurch gekennzeichnet,**
- daß die zweite Stützwelle (27) von der ersten Stützwelle (21) um einen Abstand (l) entfernt ist, der gleich dem Abstand (l) zwischen der ersten Stützwelle (21) und der drehbaren Antriebswelle (16) ist,
- daß erste Steuermittel (24) sich zwischen einer ersten Welle (19), die nicht drehbar an dem Rahmen (10) befestigt ist, und der ersten Stützwelle (21) erstrecken, um dazwischen eine konstante Winkelbeziehung aufrechtzuerhalten, und
- daß zweite Steuermittel (30) sich zwischen einer zweiten Welle (25), die nicht drehbar an dem ersten Arm (11) befestigt ist, und der zweiten Stützwelle (27) erstrecken, um dazwischen eine konstante Winkelbeziehung aufrechtzuerhalten,
- so daß ein nicht drehbar an dem Werkzeughalter (31) befestigtes Werkzeug (8) parallel zu dem ersten Arm (11) gehalten ist.

2. Ausgleichsmechanismus nach Anspruch 1, bei dem die ersten und zweiten Steuermittel (24, 30) Riemen aufweisen, die sich zwischen Riemenscheiben (20, 23; 26, 29) erstrecken, die nicht drehbar an den zugehörigen Wellen befestigt sind.

## Revendications

1. Un mécanisme de déport pour un axe de rotation d'un robot, comprenant :
un bâti (10) ;
un arbre d'entraînement tournant (16) sur le bâti (10) ;
un premier bras (11) fixé de façon non tournante à l'arbre d'entraînement tournant (16) ;
un premier arbre support (21) fixé de façon tournante au premier bras (11) de façon à être parallèle à l'arbre d'entraînement tournant (16) et séparé de celui-ci par une distance (l) ;
un second bras (12) fixé de façon non tournante au premier arbre support (21) ;
un second arbre support (27) fixé de façon tournante au second bras (12) de façon à être parallèle au premier arbre support (21) ; et
un porte-outil (31) fixé de façon non tournante au second arbre support ;
CARACTERISÉ EN CE QUE :
le second arbre support (27) est séparé du premier arbre support (21) par une distance (l) égale a la distance (l) entre le premier arbre support (21) et l'arbre d'entraînement tournant (16) ;
un premier moyen de contrôle (24) est situé entre un premier arbre (19) fixé de façon non tournante au bâti (10) et le premier arbre support (21) pour maintenir un rapport angulaire constant entre eux ; et
un second moyen de contrôle (30) est situé entre un second arbre (25) fixé de façon non tournante au premier bras (11) et le second arbre support (27) pour maintenir un rapport angulaire constant entre eux ;
de telle sorte qu'un outil (8) fixé de façon non tournante au porte-outil (31) soit maintenu parallèle au premier bras (11).

2. Un mécanisme à déport selon la revendication 1, dans lequel le premier et le second moyens de contrôle (24,30) comprennent des courroies tendues entre des poulies (20,23 ; 26,29) fixées de façon non tournante aux arbres correspondants.
